# EUROPEAN PATENT SPECIFICATION

(11) **EP 1 681 804 B1**
(45) Date of publication and mention of the grant of the patent: **23.04.2008**
(21) Application number: 05250177.2
(22) Date of filing: 14.01.2005
(51) Int. Cl.: H04L 12/28, H04Q 7/32, H04Q 7/38

(54) **Network selection in a multi-systems environment in a visited PLMN**
Netzauswahl in einer Mehrfachsystemumgebung in einem besuchten PLMN
Sélection de réseau dans un environnement à plusieurs systémes dans un réseau visité

(43) Date of publication of application: 19.07.2006
(73) Proprietor: Research In Motion Limited, Waterloo, Ontario N2L 3W8 (CA)
(72) Inventor: Buckley, Adrian, Tracy California 95376 (US); Alfano, Nicholas P., Warwickshire CV37 7DP (GB); Carpenter, Paul, St. Margarets Twickenham TW1 1LG (GB)
(74) Representative: Roberts, Gwilym Vaughan

(56) References cited:
- WO-A-01/05174
- WO-A-20/04047480
- US-A1- 2001 027 118
- 3GPP: "NAS Functions related to Mobile Station (MS) in idle mode" 3GPP TS 23.122 V7.0.0, [Online] 7 January 2005 (2005-01-07), XP002330087 Retrieved from the Internet: URL:http://www.3gpp.org/ftp/Specs/html-inf o/23122.htm> [retrieved on 2005-05-31]

## Description

### FIELD OF THE DISCLOSURE

The present patent disclosure generally relates to communication networks. More particularly, and not by way of any limitation, the present patent application is directed to a scheme for providing regulatory compliance in performing network selection in a foreign country.

### BACKGROUND

Wireless telephony standards such as the 3^{rd} Generation Partnership Project (3GPP) specifications have defined two sets of network scanning functionality for a wireless user equipment (UE) device depending on whether the device is located in its home country or not. These functions are set forth in the 3GPP Technical Specification (TS) 23.122 *Non-Access Stratum (NAS) Functions Related to Mobile Station (MS) in Idle Mode,* incorporated by reference herein. Additional functionality currently being developed allows an operator to define a number of networks as equivalent to a home network associated with a UE device. Certain issues such as regulatory and procedural compliance can arise, however, where the UE device attempts to obtain service in an equivalent network that is provisioned in a foreign country.

PCT published patent application WO01/05174 A1 discloses a method and system of protocol determination for a mobile station in which a mobile station can vary the manner in which it scans for depending on the country in which the mobile station is located. A mobile station, when activated, differentiates between areas that require a particular protocol, for example, GSM, and areas that require a different protocol, for example, IS-136. Alternatively, a mobile station can search only for systems on a particular protocol, for example, GSM, in some countries and only for systems on a different protocol, for example, IS-136, in other countries. A mobile station can alternatively search for the best system regardless of protocol or within a particular subset of protocols depending on the country. The document "3^{rd} Generation Partnership Project; Technical Specification Group Core Network; NAS Functions related to Mobile Station (MS) in idle mode (Release 7)" discloses arrangements which relate to the tasks undertaken by the network protocols of a mobile device operating in idle mode, powered up but not having a dedicated communication channel allocated to it. D1 discloses mechanisms by which a PLMN other than the home PLMN may be selected if the home PLMN is not available. According to the disclosed methods, the mobile device identifies whether or not one or more networks constitute equivalent home PLMNs. D1 discusses these mechanisms in the context of national roaming as well as international roaming. International roaming is defined as the mode in which the mobile device is receiving service on a PLMN of a different country than that of the home PLMN. If the mobile device determines that it is in the national roaming mode, the mobile device makes a periodic search for the home PLMN. The mobile device may contain a list of location areas within which roaming service is not allowed.

### SUMMARY

In one embodiment, a scheme is disclosed for providing regulatory compliance in network selection by a wireless UE device that is operable to discover an equivalent home network in a foreign country. Upon receiving a network identity code from a network node, a determination is made if the network identified by the network identity code is an equivalent home network with respect to a subscriber identity associated with the UE device. If so, network scanning is performed by the UE device in accordance with scanning procedures specified for a home country associated with the subscriber identity, provided that the geographic code portion of the network country code identifies a geographic area in the home country of the subscriber identity. Otherwise, network scanning is performed by the UE device in accordance with scanning procedures specified for a foreign geographic region identified in the network identity code.
One aspect of the invention provides a network selection method in accordance with claim 1.
Another aspect of the invention provides a user equipment device in accordance with claim 7.

### BRIEF DESCRIPTION OF THE DRAWINGS

A more complete understanding of the embodiments of the present patent disclosure may be had by reference to the following Detailed Description when taken in conjunction with the accompanying drawings wherein:

FIG. 1 depicts a generalized network environment wherein an embodiment of the present patent disclosure may be practiced;

FIG. 2 depicts an exemplary embodiment of a network environment where a wireless UE device is operably disposed for network discovery and selection in accordance with the teachings of the present patent disclosure;

FIGS. 3A - 3C depict exemplary database structures which may be provided with a UE device in accordance with the teachings of the present patent disclosure;

FIG. 4 depicts a flowchart of an embodiment of a network selection method;

FAG. 5 depicts an exemplary message flow diagram of the present patent disclosure; and

FIG. 6 depicts a block diagram of an embodiment of a UE wireless device operable to perform network selection procedures set forth according to the teachings of the present patent disclosure.

### DETAILED DESCRIPTION OF THE DRAWINGS

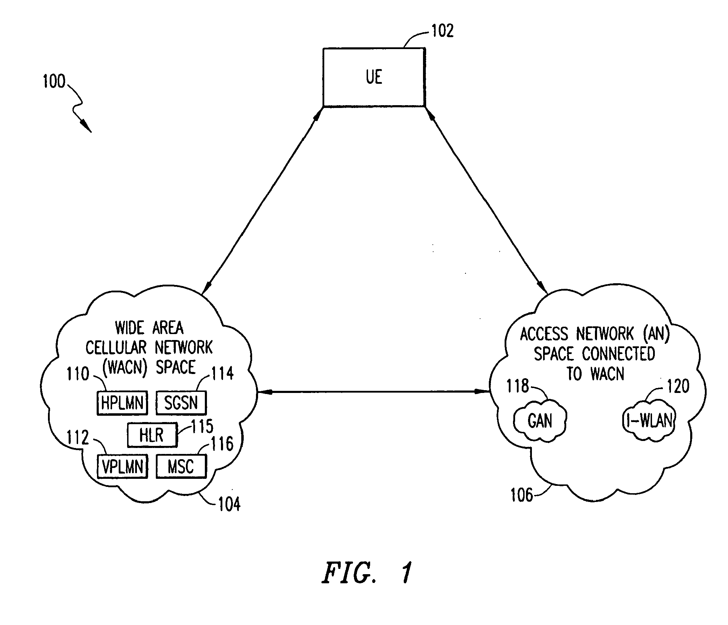

A system and method of the present patent disclosure will now be described with reference to various examples of how the embodiments can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein is an exemplary generalized network environment 100 wherein an embodiment of the present patent disclosure may be practiced. A user equipment (UE) device 102 may comprise any portable computer (e.g., laptops, palmtops, or handheld computing devices) or a mobile communications device (e.g., cellular phones or data-enabled handheld devices capable of receiving and sending messages, web browsing, et cetera), or any enhanced personal digital assistant (PDA) device or integrated information appliance capable of email, video mail, Internet access, corporate data access, messaging, calendaring and scheduling, information management, and the like, that is preferably operable in one or more modes of operation and in a number of frequency bands. For example, UE device 102 may operate in the cellular telephony band frequencies as well as wireless Local Area Network (WLAN) bands. Further, other bands in which the UE device could operate wirelessly may comprise Wi-Max bands or one or more satellite bands. By way of illustration, the network environment 100 is comprised of two broad categories of communication spaces capable of providing service to UE device 102 wherein access to a Public Land Mobile Network (PLMN) may be accomplished in accordance with the teachings set forth herein. In wide area cellular network (WACN) space 104, there may exist any number of PLMNs that are operable to provide cellular telephony services which may or may not include packet-switched data services. Depending on the coverage area(s) and whether the user is roaming, WACN space 104 can include a number of home networks 110 (i.e., home PLMNs or HPLMNs, or equivalent HPLMNs or EHPLMNs), visited networks (i.e., VPLMNs) 112, each with appropriate infrastructure such as Home Location Register (HLR) nodes 115, Mobile Switching Center (MSC) nodes 116, and the like. Since the WACN space 104 may also include a General Packet Radio Service (GPRS) network that provides a packet radio access for mobile devices using the cellular infrastructure of a Global System for Mobile Communications (GSM)-based carrier network, a Serving GPRS Support Node (SGSN) 114 is exemplified therein. Additionally, by way of generalization, the PLMNs of the WACN space 104 may comprise networks selected from the group consisting of an Enhanced Data Rates for GSM Evolution (EDGE) network, an Integrated Digital Enhanced Network (IDEN), a Code Division Multiple Access (CDMA) network, a Time Division Multiple Access (TDMA) network, a Universal Mobile Telecommunications System (UMTS) network, or any 3^{rd} Generation Partnership Project (3GPP)-compliant network (e.g., 3GPP or 3GPP2), all operating with well known frequency bandwidths and protocols.

Further, UE device 102 is operable to obtain service from an access network (AN) space 106 that is connected to the WACN space 104. In one implementation, the AN space 106 includes one or more generic access networks (GANs) 118 as well as any type of wireless LAN (WLAN) arrangements 120, both of which may be generalized as any AN that is operable to provide access services between UE device 102 and a PLMN core network using a broadband Internet Protocol (IP)-based network. WLAN arrangements 120 provide short-range wireless connectivity to UE device 102 via access points (APs) or "hot spots," and can be implemented using a variety of standards, e.g., IEEE 802.11b, IEEE 802.11a, IEEE 802.11g, HiperLan and HiperLan II standards, Wi-Max standard, OpenAir standard, and the Bluetooth standard.

In one embodiment, interfacing between the WACN and AN spaces may be effectuated in accordance with certain standards. For instance, GAN 118 may be interfaced with one or more PLMNs using the procedures set forth in the 3GPP TR 43.901 and 3GPP TS 43.xxx documents as well as related documentation. Likewise, WLAN 120 may interfaced with at least one PLMN core using the procedures set forth in the 3GPP TS 22.234, 3GPP TS 23.234 and 3GPP TS 24.234 documents as well as related documentation, and may therefore be referred to as an Interworking WLAN (I-WLAN) arrangement. For purposes of the present patent disclosure, these standards are incorporated by reference where applicable.

It should further be realized that any portion of the network environment 100, either the WACN space 104, the AN space 106, or both, may include a location area that is outside the home country or region associated with the subscriber of the UE device. As set forth in 3GPP TS 23.122, two sets of network scanning functionality are defined for the UE device 102. One set of network scanning procedures are applicable when the UE device 102 is located within its home country or home region. On the other hand, a second set of network scanning procedures are provided when the UE device 102 is not in its home country. Accordingly, depending on where the location area is, the UE device 102 is operable to execute appropriate scanning procedures even when an EHPLMN is discovered in a foreign country, as will be described in detail hereinbelow.

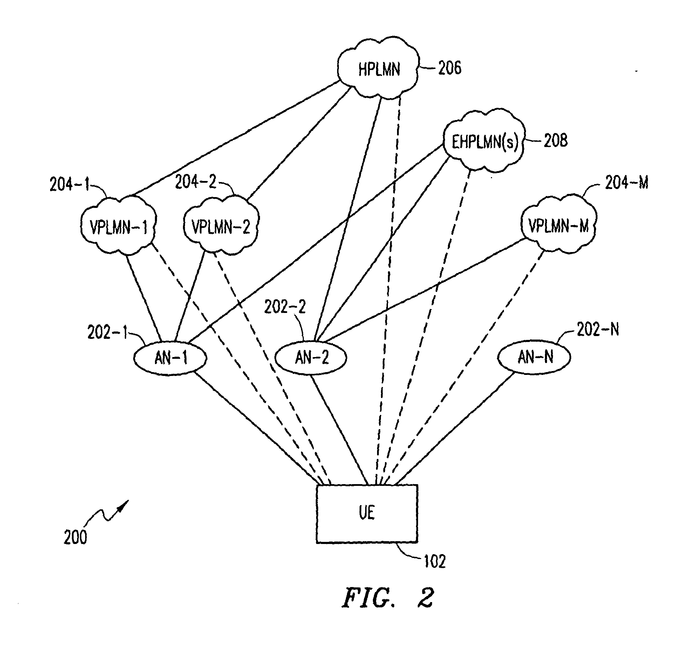

To formalize the teachings of the present disclosure, reference is now taken to FIG. 2 wherein an exemplary embodiment of a network environment 200 is shown that is a more concrete subset of the generalized network environment 100 illustrated in FIG. 1. As depicted, wireless UE device 102 is operably disposed for discovering a set of PLMNs that allow access via conventional radio access network (RAN) infrastructure in addition to having connectivity with one or more ANs accessible to UE device 102. By way of example, AN-1 202-1 through ANN 202-N, which are now generalized for purposes of the present patent disclosure to include any type of GAN, WLAN and/or I-WLAN arrangements (known or heretofore unknown), are operable to provide access to one or more PLMNs once discovered by the UE device. As illustrated, a wireless AN may support connectivity to one or more PLMNs, or none at all, which can include VPLMNs 204-1 through 204-M as well as HPLMNs (e.g., HPLMN 206) and one or more EHPLMNs 208 with respect to UE device 102. Where AN-PLMN connectivity is supported, which PLMNs behind a particular AN are visible to UE device 102 may depend on a number of commercial factors, e.g., contractual arrangements between AN operators and PLMN operators. By way of illustration, AN-1 202-1 supports connectivity to VPLMN-1 204-1, VPLMN-204-2, and EHPLMN(s) 208. Likewise, AN-2 202-1 supports connectivity to VPLMN-M 204-M as well as to HPLMN 206 and EHPLMN(s) 208. On the other hand, AN-N 202-N has no connectivity to the wide area PLMNs. Furthermore, in addition to being able to discover the various PLMNs via a wireless AN, UE 102 is also operable to scan the cellular bands to discover the PLMNs directly. Regardless of how the PLMNs are discovered, at any rate, one or more of the VPLMNs and/or EHPLMNs may be located outside the home country of the UE device 102.

As is well known, each of the wide area cellular PLMNs may be arranged as a number of cells, with each cell having sectors (e.g., typically three 120-degree sectors per base station (BS) or cell). Each individual cell is provided with a Cell Global Identification (CGI) parameter to identify them. A group of cells is commonly designated as a Location Area (LA) and may be identified by an LA Identifier (LAI). At the macro level, the PLMNs may be identified in accordance with the underlying cellular technology. For example, GSM-based PLMNs may be identified by an identifier comprised of a Mobile Country Code (MCC) and Mobile Network Code (MNC). The CDMA/TDMA-based PLMNs may be identified by a System Identification (SID) parameter and/or a Network Identification (NID) parameter. Irrespective of the cellular infrastructure, all cells broadcast the macro level PLMN identifiers (i.e., network identity codes) such that a wireless device (e.g., UE device 102) wishing to obtain service can identify the wireless network as well as its geographic location.

Additionally, a subscriber is also given a unique identifier which can vary depending on the underlying cellular infrastructure and may be constructed at least in part from some of the parametrics that are used in constructing the network identifiers. In GSM, for example, an International Mobile Subscriber Identity (IMSI) parameter uniquely identifies the subscriber and is constructed as [MCC][MNC][MIN], where [MCC] identifies the country that the subscriber is from (i.e., the subscriber's home country/region), [MNC] identifies the PLMN network, and [MIN] is the unique ID that identifies the mobile unit (i.e., the UE wireless device) within the network. In some situations, a single country or geographic region (e.g., North America) may have multiple country codes (i.e., MCCs) assigned to it, although the entire region is regulated by the same scanning functionality requirements (i.e., a common set of scanning procedures).

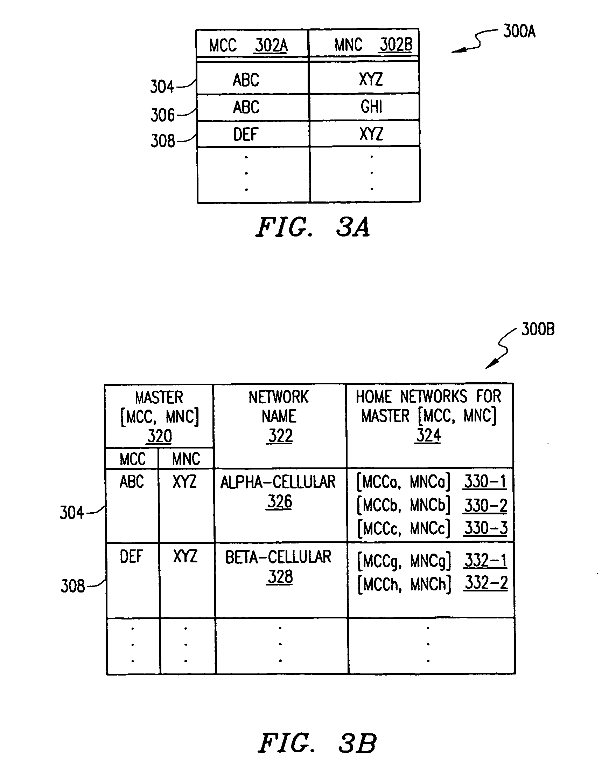

For purposes of illustration, the embodiments of the present patent disclosure will be particularly exemplified in reference to GSM networks, although it should be appreciated that the teachings set forth herein may be applied *mutatis mutandis* in other cellular networks as well. FIGS. 3A-3C depict exemplary database structures which may be provided with a UE device for facilitating network selection and regulatory compliance in accordance with one embodiment. Reference numeral 300A refers to a basic database structure that comprises a list of [MCC] 302A and [MNC] 302B combinations that may be identified as being the same networks. In the case of equivalent networks, the [MCC][MNC] combinations may identify a set of EHPLMNs (foreign or otherwise) for the IMSI associated with the subscriber. Reference numerals 304, 306 and 308 refer to three exemplary networks, wherein networks 304 and 306 share the same [MCC], i.e., [ABC], and networks 304 and 308 share the same [MNC] (i.e., [XYZ]). In one exemplary embodiment, the data structure 300A may be stored as an elementary file (EF) structure on a Subscriber Identity Module (SIM) card or Removable User Identity Module (RUIM) card operable with a wireless UE device. In another embodiment, the data structure 300A could be stored in a memory module integrated with the wireless UE device.

Reference numeral 300B refers to an enhanced database structure where additional information may be provided for facilitating network selection. A Master [MCC][MNC] column 320 identifies the [MCC] and [MNC] combinations that match the IMSI's [MCC]/[MNC] part (i.e., Master Home PLMN). A network name column 322 identifies the master network by name. A home network (EHPLMN) column 324 includes a list of home networks for each of the Master [MCC][MNC] pairs. In one implementation, the [MCC][MNC] combinations identifying the home networks may be provided in a priority order. For example, a positional priority may be implemented wherein an [MCC][MNC] combination at the top has a higher priority over the one below it, or an [MCC][MNC] combination to the left has a higher priority over the one to the right. An explicit priority ranking may also be provided wherein an indicator indicating the priority of the PLMN is appended to the database structure 300B. For instance, a value of [0] may indicate the highest priority. Where there is no priority indicator stored, all PLMNs have equal priority. Additionally, although not shown in FIG. 3B, an indicium column may also be provided for uniquely identifying each PLMN listed in the home network list 324, wherein the indicium may comprise a unique identity name that can include some reference to the Master [MCC][MNC] pair or the network name associated therewith.

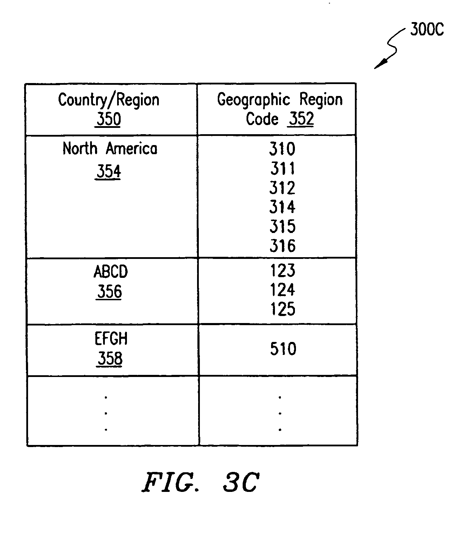

Referring now to FIG. 3C, a data structure 300C includes a mapping relationship between various geographic entities 350 (i.e., individual countries and supra-national geographic regions such as North America, the European Economic Community, et cetera) and geographic region codes 352 associated therewith. In a presently preferred exemplary embodiment, where a region/country has multiple country codes assigned to it, they are stored in such a way that all of them are associated with or otherwise mapped to the single geographic entity, which typically operates under a common mobile communications regulatory regime. It should be appreciated by one skilled in the art that this arrangement allows the wireless UE device to determine what country it is in when examining the country code of a PLMN it is receiving service from. By way of example, there are seven [MCC] values, 310 to 316, assigned to North America 354. Another exemplary entity, a single country ABCD 356, may also be provided with multiple [MCC] values, e.g., from 123 to 125. In another example, a geographic entity EFGH 358 is assigned only one [MCC], e.g., 510. As alluded to before, the data structure 300C may be provided as part of a storage module integrated with the wireless UE device.

In one implementation, the wireless UE device is operable upon power-up to determine the capability of the SIM/RUIM card that has been inserted into it. If the wireless device discovers that the SIM/RUIM card contains a list of EHPLMNs, the device uses the list for subsequent network selection operations. If the SIM/RUIM card does not contain a list of PLMNs, the wireless device is operable to read the IMSI of the subscriber. Thereafter, if the wireless device is provided with stored home network lists in its memory for the [MCC][MNC] pairs of the IMSI, the stored PLMN database may then be used to find the list of HPLMNs associated with a particular IMSI. Otherwise, the wireless UE device is operable to perform network discovery procedures as currently specified.

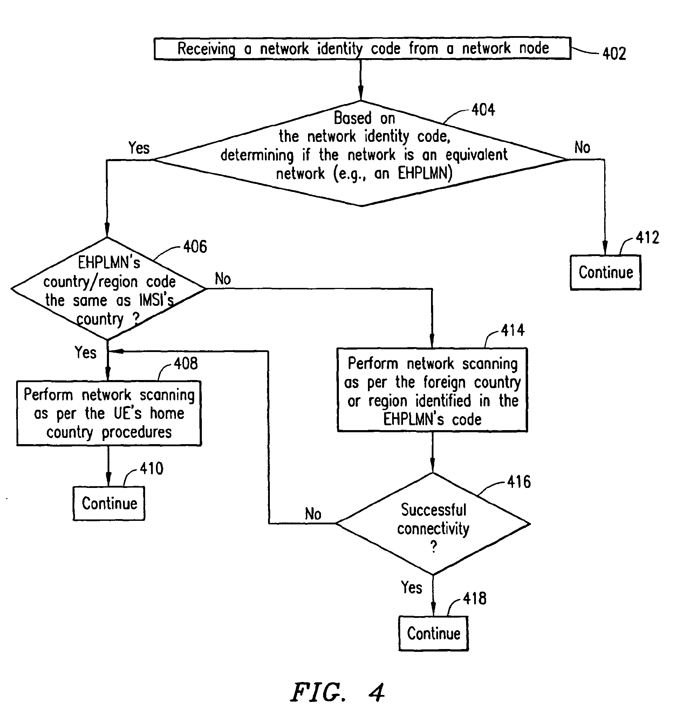

FIG. 4 depicts a flowchart of an embodiment of a network selection method wherein a foreign country may be involved. As illustrated, the wireless UE device is operable to scan in one or more frequency bands that it supports in a wideband scanning procedure to discover all available PLMNs in a location area where the device is disposed. Upon receiving a network identity code from a network node (block 402), a determination is made whether the network is an equivalent home network (e.g., EHPLMN) with respect to a subscriber identity associated with the UE device (block 404). Preferably, this determination may be performed by appropriate UE device logic for examining a stored list of MCCs such as described in detail hereinabove. If the discovered network is not a home network or its equivalent, the UE device may then proceed with applicable network procedures in a conventional manner (block 412). On the other hand, if the discovered network is an EHPLMN, a further determination is made whether the network is found to be in the same country/geographic region as the region from which the subscriber identity (e.g., IMSI) originates (block 406). This determination may be performed by examining the geographic code portion of the network identity code (e.g., the [MCC] of the [MCC,MNC] combination) and correlating it with the [MCC] of the IMSI. If the [MCC] of the equivalent home network is found to be in the same geographic region as that of the IMSI, then the UE device is operable to perform network scanning in accordance with scanning procedures specified for the home country of the subscriber identity (block 408). Thereafter, the UE device continues with network registration in a conventional manner (block 410). Otherwise, if the [MCC] of the equivalent home network is found to be in a geographic region that is different from the home country of the IMSI, i.e., a foreign geographic region, the UE device is operable to perform network scanning in accordance with the scanning procedures specified for the foreign country/region as identified in the received network identity code (block 414). Where the scanning process for the foreign country does not result in the establishment of a successful connection with the PLMN (block 416), the UE may revert to the scanning procedures specified for its home country, even though it is still located in a foreign country. Otherwise, it may continue with the foreign PLMN in a conventional manner (block 418).

As a further variation, some of the PLMNs (whether home or foreign) may be discovered by the UE via a suitable wireless AN scanning process that is effectuated in a frequency band compliant with a WLAN standard selected from the group consisting of: IEEE 802.11b standard, IEEE 802.11a standard, IEEE 802.11g standard, HiperLan standard, HiperLan II standard, Wi-Max standard, OpenAir standard, and Bluetooth standard. By way of example, where the UE is dual mode capable and when the UE finds a PLMN, it stores the network's identity (e.g., [MCC][MNC] combination) in memory or SIM or RUIM card associated with the user, until no more PLMNs can be found. As a further variation, in addition to storing the [MCC, MNC] combinations of all discovered PLMNs, the UE is capable of storing if a particular PLMN is GPRS capable or not, where such capability may be broadcast from the PLMN infrastructure. The UE is operable to perform network discovery procedures for WLAN as defined in current 3GPP TS 23.234 and 3GPP TS 24.234 specifications (incorporated by reference herein). If the WLAN finds a Service Set ID (SSID) that it knows is the HPLMN, the UE authenticates with that WLAN using the Root Network Access Identifier (NAI). Otherwise, the UE performs network discovery as specified in the 3GPP TS 23.234 and 3GPP TS 24.234 specifications. As a further variation, in addition to the SSID lists defined in the 3GPP specifications for WLAN access, extra SSID/PLMN lists and associated filtering criteria can be stored so that the UE is not only aware of the WLANs that support PLMN access, but a mechanism is provided thereby to speed up network selection as well as optimize/customize the user experience. By way of illustration, the following lists may be defined:
- S: Operator-controlled Preferred SSIDs for WLAN access;
- S: User-controlled SSIDs for WLAN access;
- S: Forbidden SSIDs for WLAN access;
- S: Operator-controlled Preferred PLMNs for WLAN access;
- S: User-controlled PLMNs for WLAN access;
- S: Forbidden PLMNs for WLAN access;
wherein the priority of the SSID and PLMN is dictated by its position in the list.

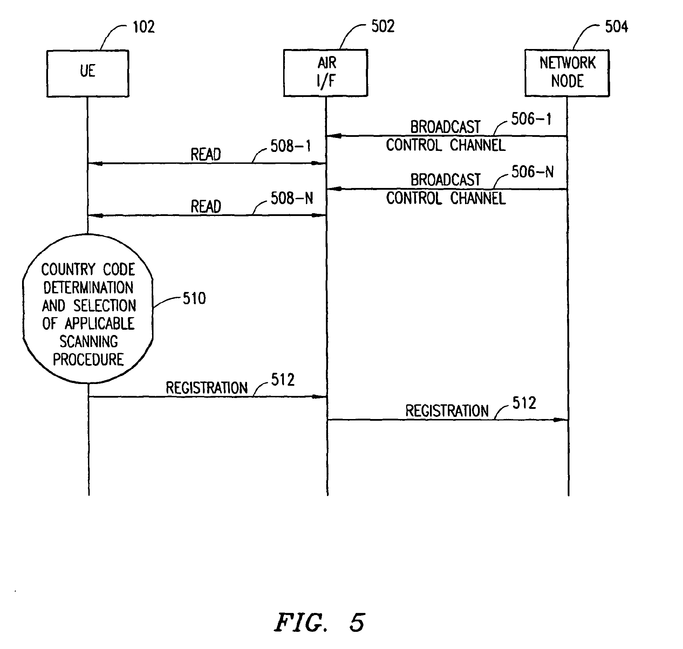

FIG. 5 depicts an exemplary message flow diagram in reference to the methodology set forth above. A network node 504 is operable to broadcast information via associated control channel over the air interface 502. In accordance with the teachings of the present patent disclosure, the network node 504 may comprise a Base Transceiver Station (BTS) node deployed in a particular cellular network. Reference numerals 506-1 through 506-N refer to the control channel messages that are broadcast by the network node 504 at a designated repetition rate. In one implementation, the broadcast information may include network identity information, capability information, adjacent cell information, among other types of information. In idle mode, UE 102 is operable to read the broadcast information over the air interface 502 and determine applicable scanning procedures (block 510) based upon the received country code and its correlation with the stored database structures. Upon determining appropriate procedures in accordance with applicable regulatory requirements, UE 102 is able to effectuate registration 512 with the network node 504.

Those skilled in the art should recognize that although the network node 504 is exemplified as a PLMN node, it is within the scope of the present disclosure to provide a WLAN node as the network node wherein appropriate scanning selection procedures as well as regulatory compliance procedures may be performed.

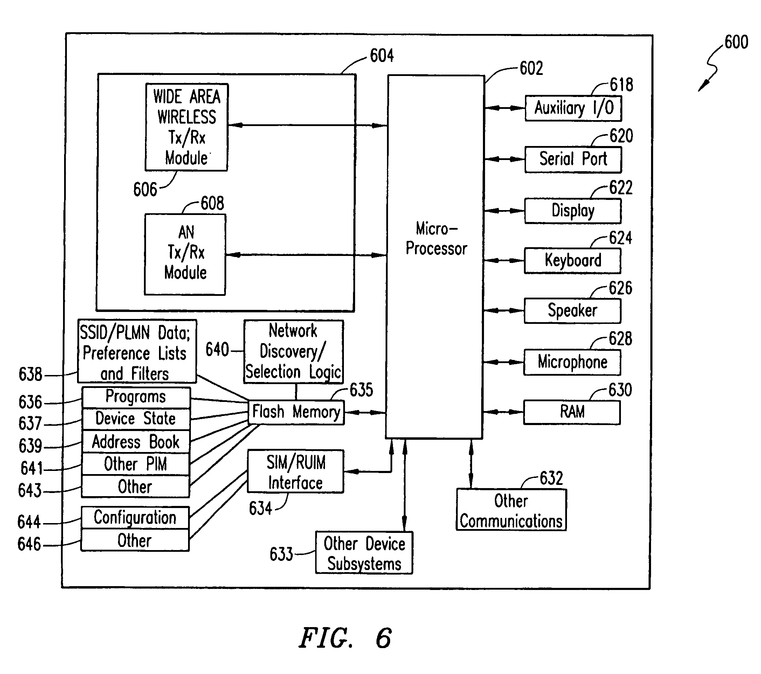

FIG. 6 depicts a block diagram of an embodiment of a UE wireless device 600 operable to perform network and scanning selection procedures set forth according to the teachings of the present patent disclosure. It will be apparent to those skilled in the art upon reference hereto that although an embodiment of UE 102 discussed above may comprise an arrangement similar to one shown in FIG. 6, there can be a number of variations and modifications, in hardware, software or firmware, with respect to the various modules depicted. Accordingly, the arrangement of FIG. 6 should be taken as illustrative rather than limiting with respect to the embodiments of the present patent disclosure. A microprocessor 602 providing for the overall control of UE 600 is operably coupled to a communication subsystem 604 which includes transmitter/receiver (transceiver) functionality for effectuating multi-mode communications over a plurality of bands. By way of example, a wide area wireless Tx/Rx module 606 and a wireless AN Tx/Rx module 608 are illustrated. Although not particularly shown, each Tx/Rx module may include other associated components such as one or more local oscillator (LO) modules, RF switches, RF bandpass filters, A/D and D/A converters, processing modules such as digital signal processors (DSPs), local memory, etc. As will be apparent to those skilled in the field of communications, the particular design of the communication subsystem 604 may be dependent upon the communications networks with which the UE device is intended to operate. In one embodiment, the communication subsystem 604 is operable with both voice and data communications.

Microprocessor 602 also interfaces with further device subsystems such as auxiliary input/output (I/O) 618, serial port 620, display 622, keyboard 624, speaker 626, microphone 628, random access memory (RAM) 630, a short-range communications subsystem 632, and any other device subsystems generally labeled as reference numeral 633. To control access, a SIM/RUIM interface 634 is also provided in communication with the microprocessor 602. In one implementation, SIM/RUIM interface 634 is operable with a SIM/RUIM card having a number of key configurations 644 and other information 646 such as identification and subscriber-related data as well as one or more SSID/PLMN lists and filters described in detail hereinabove.

Operating system software and other control software may be embodied in a persistent storage module (i.e., non-volatile storage) such as Flash memory 635. In one implementation, Flash memory 635 may be segregated into different areas, e.g., storage area for computer programs 636 as well as data storage regions such as device state 637, address book 639, other personal information manager (PIM) data 641, and other data storage areas generally labeled as reference numeral 643. Additionally, appropriate network discovery and scanning selection logic 640 may be provided as part of the persistent storage for executing the various scanning selection procedures, correlation techniques, and related mechanisms set forth in the preceding sections. Associated therewith is a storage module 638 for storing the SSID/PLMN lists, country/geographic codes, selection/scanning filters, capability indicators, et cetera, also described in detail hereinabove.

It is believed that the operation and construction of the embodiments of the present patent application will be apparent from the Detailed Description set forth above. While the exemplary embodiments shown and described may have been characterized as being preferred, it should be readily understood that various changes and modifications could be made therein without departing from the scope of the present invention as set forth in the following claims.

## Claims

1. A wireless network selection method in a user equipment (UE) device (102) in a location area, comprising:
receiving (402) a network identity code;
determining (404) if a network identified by said network identity code is an equivalent home network with respect to a subscriber identity associated with said UE device (102);
responsive to said determining (404), determining (406) whether a geographic code associated with said equivalent home network is associated with the same geographic region as a home network associated with said subscriber identity;
responsive to determining (406) that said equivalent home network is associated with the same geographic region as the home network, then performing (408) network scanning in accordance with scanning procedures specified for a home geographic region associated with said subscriber identity; and
otherwise, performing (414) network scanning in accordance with scanning procedures specified for a foreign geographic region identified in said network identity code.

2. The network selection method as recited in claim 1, wherein said network identity code identifies a network that comprises a Public Land Mobile Network (PLMN) selected from the group consisting of a General Packet Radio Service (GPRS) network, an Enhanced Data Rates for Global System for Mobile Communications (GSM) Evolution (EDGE) network, a 3rd Generation Partnership Project (3GPP)-compliant network, an Integrated Digital Enhanced Network (IDEN), a Code Division Multiple Access (CDMA) network, a Universal Mobile Telecommunications System (UMTS) network, and a Time Division Multiple Access (TDMA) network

3. The network selection method as recited in claim 1, wherein said network identity code comprises a combination of a Mobile Country Code (MCC) and a Mobile Network Code (MNC).

4. The network selection method as recited in claim 1, claim 2 or claim 3, further comprising:
determining (416) if said scanning procedures specified for said foreign geographic region fail to establish connectivity with a network node (504) providing said network identity code; and
if so, performing (408) network scanning in accordance with said scanning procedures specified for said home geographic region.

5. The network selection method as recited in claim 1, wherein said subscriber identity comprises an International Mobile Subscriber Identity (IMSI) parameter.

6. The network selection method as recited in claim 1, claim 2, claim 3, claim 4 or claim 5, wherein receiving said network identity code includes;
receiving said network identity code while said UE device is in idle mode (102).

7. A user equipment (UE) device (600) for wireless network, comprising:
a communication subsystem (604) including a transceiver module (606) operable for receiving a network identity code;
a logic module (640) operable to determine if a network identified by a network identity code is an equivalent home network with respect to a subscriber identity associated with said UE device (600), and if so, said logic module (640) further determining whether a geographic code associated with said equivalent home network is associated with the same geographic region as a home network associated with said subscriber identity;
means, operable responsive to said determining that said equivalent home network is associated with the same geographic region as the home network, for performing (408) network scanning in accordance with scanning procedures specified for a home geographic region associated with said subscriber identity; and
means for performing (414) network scanning in accordance with scanning procedures specified for a foreign geographic region identified in said network identity code, if said geographic code associated with said equivalent home network does not identify the home geographic region associated with said subscriber identity.

8. The UE device (600) as recited in claim 7, wherein said network identity code identifies a network that comprises a Public Land Mobile Network (PLMN) selected from the group consisting of a General Packet Radio Service (GPRS) network, an Enhanced Data Rates for Global System for Mobile Communications (GSM) Evolution (EDGE) network, a 3rd Generation Partnership Project (3GPP)-compliant network, an Integrated Digital Enhanced Network (IDEN), a Code Division Multiple Access (CDMA) network, a Universal Mobile Telecommunications System (UMTS) network, and a Time Division Multiple Access (TDMA) network.

9. The UE device as recited in claim 7, wherein said network identity code comprises a combination of a Mobile Country Code (MCC) and a Mobile Network Code (MNC).

10. The UE device (600) as recited in claim 7, claim 8 or claim 9, further comprising:
means for determining (416) if said scanning procedures specified for said foreign geographic region fail to establish connectivity with a network node (504) providing said network identity code; and
means, operable responsive to said determining (416), for reverting to performing (408) network scanning in accordance with said scanning procedures specified for said home geographic region.

11. The UE device (600) as recited in claim 7, wherein said subscriber identity comprises an International Mobile Subscriber Identity (IMSI) parameter.

12. The UE device (600) as recited in claim 7, claim 8, claim 9, claim 10 or claim 11, wherein said transceiver module (606) is operable for receiving said network identity code when said UE device (600) is in idle mode.

13. The UE device (600) as recited in claim 12, wherein said communication subsystem (604) further comprises a transceiver module (608) operable for scanning in a frequency band compliant with a wireless access network scanning process, and further wherein said network identity code identifies a network that comprises a wireless access network operable with a Wireless Local Area Network (WLAN) standard selected from the group consisting of: IEEE 802.11b standard, IEEE 802.11a standard, IEEE 802.11g standard, HiperLan standard, HiperLan II standard, Wi-Max standard, OpenAir standard, and Bluetooth standard.

## Patentansprüche

1. Ein Auswahlverfahren für Mobilfunknetze in einer Benutzereinrichtungs-(UE)-Vorrichtung (102) in einem Standortbereich, welches umfasst:
- Erhalten (402) eines Netzwerk-Identitäts-Codes;
- Ermitteln (404), ob ein Netzwerk, welches durch den besagten Netzwerk-Identitäts-Code identifiziert wird, ein äquivalentes Heimnetzwerk in Bezug auf eine Teilnehmer-Identität ist, welche mit der besagten UE-Vorrichtung (102) assoziiert ist;
- in Antwort auf das besagte Ermitteln (404), Ermitteln (406), ob ein geographischer Code, welcher mit dem besagten äquivalenten Heimnetzwerk assoziiert ist, mit der gleichen geographischen Region assoziiert ist, wie ein Heimnetzwerk, welches mit der besagten Teilnehmer-Identität assoziiert ist;
- in Antwort auf das Ermitteln (406), dass das besagte äquivalente Heimnetzwerk mit der gleichen geographischen Region assoziiert ist, dann das Durchführen (408) von Netzwerküberprüfüng entsprechend mit Überprüfungsprozeduren, welche für eine geographische Heimregion, die mit der besagten Teilnehmer-Identität assoziiert ist, spezifiziert sind; und
- anderenfalls, das Durchführen (414) von Netzwerkprüfung entsprechend mit Überprüfungsprozeduren, welche für eine geographische Fremdregion, die in dem besagten Netzwerk-Identitäts-Code identifiziert ist, spezifiziert sind.

2. Das Netzwerk-Auswahlverfahren, wie in Anspruch 1 vorgetragen, wobei der besagte Netzwerk-Identitäts-Code ein Netzwerk identifiziert, welches ein Öffentliches Mobiles Überland-Netzwerk (PLMN) umfasst, welches aus der Gruppe, bestehend aus einem General Packet Radio Service (GPRS) Netzwerk, einem Enhanced Data Rates for Global System for Mobile Communications (GSM) Evolution (EDGE) Netzwerk, einem dem 3rd Generation Partnership Project (3GPP) konformen Netzwerk, einem Integrated Digital Enhanced Netzwerk (IDEN), einem Code Division Multiple Access (CDMA) Netzwerk, einem Universal Mobile Telecommunications System (UMTS) Netzwerk, und einem Time Division Multiple Access (TDMA) Netzwerk, ausgewählt wurde.

3. Das Netzwerk-Auswahlverfahren, wie in Anspruch 1 vorgetragen, wobei der besagte Netzwerk-Identitäts-Code eine Kombination aus einem Mobile Country Code (MCC) und einem Mobile Network Code (MNC) enthält.

4. Das Netzwerk-Auswahlverfahren, wie in Anspruch 1, Anspruch 2 oder Anspruch 3 vorgetragen, welches desweiteren enthält :
- Bestimmen (416), ob die besagten Überprüfungsprozeduren, welche für die besagte geographische Fremdregion spezifiziert wurden, daran scheitern Konnektivität mit einem Netzwerkknoten (504), welcher den besagten Netzwerk-Identitäts-Code liefert, herzustellen; und
- wenn das so ist, Durchführen (408) von Netzwerküberprüfung in Übereinstimmung mit den besagten Überprüfüngsprozeduren, welche für die besagte geographische Heimregion spezifiziert wurden.

5. Das Netzwerk-Auswahlverfahren, wie in Anspruch 1 vorgetragen, wobei die besagte Teilnehmeridentität einen International Mobile Subscriber Identity (IMSI) Parameter enthält.

6. Das Netzwerk-Auswahlverfahren, wie in Anspruch 1, Anspruch 2, Anspruch 3, Anspruch 4 oder Anspruch 5 vorgetragen, wobei das Erhalten des besagten Netzwerk-Identitäts-Codes enthält;
- Erhalten des besagten Netzwerk-Identitäts-Codes während die besagte UE-Vorrichtung im Leerlauf Modus (102) ist.

7. Eine Benutzereinrichtungs-(UE)-Vorrichtung (600) für Mobilfunknetze, welche umfasst :
- ein Kommunikationssubsystem (604), welches ein Sender/Empfänger Modul (606) enthält, welches zum Empfang eines Netzwerk-Identitäts-Codes betrieben werden kann;
- ein Logikmodul (640), welches dazu betrieben werden kann, um zu bestimmen, ob ein, durch einen Netzwerk-Identitäts-Code identifiziertes Netzwerk ein äquivalentes Netzwerk in Bezug auf eine, mit der besagten UE Vorrichtung (600) assoziierten, Teilnehmeridentität ist, und wenn das so ist, das Logikmodul (640) weiter bestimmt, ob ein, mit dem besagten äquivalenten Heimnetzwerk assoziierter geographischer Code mit der gleichen geographischen Region assoziiert ist, wie ein Heimnetzwerk, welches mit der besagten Teilnehmeridentität assoziiert ist;
- Mittel, welche als Antwort auf das besagte Bestimmen, ob das besagte äquivalente Heimnetzwerk mit der gleichen geographischen Region assoziiert ist wie das Heimnetzwerk, betrieben werden können, um Netzwerküberprüfung in Übereinstimmung mit Überprüfungsprozeduren durchzuführen (408), welche für eine geographische Heimregion spezifiziert wurden, welche mit der besagten Teilnehmeridentität assoziiert ist; und
- Mittel zum Durchführen (414) von Netzwerküberprüfung in Übereinstimmung mit Überprüfungsprozeduren, welche für eine geographische Fremdregion spezifiziert wurden, welche in dem besagten Netzwerk-Identitäts-Code identifiziert wird, wenn der besagte geographische Code, welcher mit dem besagten äquivalenten Heimnetzwerk assoziiert ist, nicht die geographische Heimregion identifiziert, welche mit der besagten Teilnehmer Identität assoziiert ist.

8. Die UE-Vorrichtung (600), wie in Anspruch 7 vorgetragen, wobei der besagte Netzwerk-Identitäts-Code ein Netzwerk identifiziert, welches ein Öffentliches Mobiles Überland-Netzwerk (PLMN) umfasst, welches aus der Gruppe, bestehend aus einem General Packet Radio Service (GPRS) Netzwerk, einem Enhanced Data Rates for Global System for Mobile Communications (GSM) Evolution (EDGE) Netzwerk, einem dem 3rd Generation Partnership Project (3GPP) konformen Netzwerk, einem Integrated Digital Enhanced Netzwerk (IDEN), einem Code Division Multiple Access (CDMA) Netzwerk, einem Universal Mobile Telecommunications System (UMTS) Netzwerk, und einem Time Division Multiple Access (TDMA) Netzwerk, ausgewählt wurde.

9. Die UE-Vorrichtung (600), wie in Anspruch 7 vorgetragen, wobei der besagte Netzwerk-Identitäts-Code eine Kombination aus einem Mobile Country Code (MCC) und einem Mobile Network Code (MNC) enthält.

10. Die UE-Vorrichtung (600), wie in Anspruch 7, Anspruch 8 oder Anspruch 9 vorgetragen, welche desweiteren enthält:
- Mittel zum Bestimmen (416), ob die besagten Überprüfungsprozeduren, welche für die besagte geographische Fremdregion spezifiziert wurden, daran scheitern Konnektivität mit einem Netzwerkknoten (504), welcher den besagten Netzwerk-Identitäts-Code liefert, herzustellen; und
- Mittel, welche in Antwort auf das Bestimmen betrieben werden können, um zu dem Durchführen (408) von Netzwerküberprüfung in Übereinstimmung mit den besagten Überprüfungsprozeduren, welche für die besagte geographische Heimversion spezifiziert wurden, zurückzukehren.

11. Die UE-Vorrichtung (600), wie in Anspruch 7 vorgetragen, wobei die besagte Teilnehmeridentität einen International Mobile Subscriber Identity (IMSI) Parameter enthält.

12. Die UE-Vorrichtung (600), wie in Anspruch 7, Anspruch 8, Anspruch 9, Anspruch 10 oder Anspruch 11 vorgetragen, wobei das besagte Sender/Empfänger Modul (606) betrieben werden kann, um den besagten Netzwerk-Identitäts-Code zu empfangen, während die besagte UE-Vorrichtung im Leerlauf Modus (102) ist.

13. Die UE-Vorrichtung (600), wie in Anspruch 12 vorgetragen, wobei das besagte Kommunikations-Subsystem (604) weiter ein Sender/Empfänger-Modul (608) umfasst, welches betrieben werden kann, um in einem Frequenzband, welches mit einem mobilen Zugangsnetzwerk-Überprüfungsprozess konform ist, zu überprüfen, und weiter, wobei der besagte Netzwerk-Identitäts-Code ein Netzwerk identifiziert, welches ein mobiles Zugangsnetzwerk umfasst, welches mit einem Wireless Local Area Network (WLAN) Standard betrieben werden kann, ausgewählt aus der Gruppe, welche umfasst : IEEE 802.11b Standard, IEEE 802.11 a Standard, IEEE 802.11 g Standard, HiperLan Standard, HiperLan II Standard, Wi-Max Standard, OpenAir Standard, und Bluetooth Standard.

## Revendications

1. Procédé de sélection de réseau sans fil dans un dispositif d'équipement d'utilisateur (UE, pour « *User Equipment* ») (102) dans une zone de localisation, comprenant les étapes consistant à :
recevoir (402) un code d'identité de réseau ;
déterminer (404) si un réseau identifié par ledit code d'identité de réseau est un réseau de rattachement équivalent par rapport à une identité d'abonné associée audit dispositif d'équipement d'utilisateur (102) ;
en réponse à ladite détermination (404), déterminer (406) si un code géographique associé audit réseau de rattachement équivalent est associé à la même région géographique que le réseau de rattachement associé à ladite identité d'abonné ;
en réponse à la détermination (406) que ledit réseau de rattachement équivalent est associé à la même région géographique que le réseau de rattachement, exécuter alors (408) un balayage des réseaux conformément à des procédures de balayage spécifiées pour une région géographique de rattachement associée à ladite identité d'abonné ; et
sinon, exécuter (414) le balayage des réseaux conformément à des procédures de balayage spécifiées pour une région géographique extérieure identifiée dans ledit code d'identité de réseau.

2. Procédé de sélection de réseau selon la revendication 1, dans lequel ledit code d'identité de réseau identifie un réseau qui comprend un réseau RMTP (pour « Réseau Mobile Terrestre Public ») sélectionné dans le groupe composé des réseaux suivants : réseau GPRS (pour « *General Packet Radio Service* » - Service général de radiocommunication par paquets), réseau EDGE (pour « *Enhanced Data Rates for Global System for Mobile Communications [GSM] Evolution* » - Évolution pour débits de données améliorés sur Système mondial de communication mobile), réseau conforme au Projet de partenariat pour la 3^{e} génération (3GPP, pour « *3rd Generation Partnership Project* »), réseau IDEN (pour « *Integrated Digital Enhanced Network* » - Réseau numérique intégré amélioré), réseau AMRC (pour Accès Multiple à Répartition par Code), réseau UMTS (pour « *Universal Mobile Telecommunications System* » - Système universel de télécommunication mobile) et réseau AMRT (Accès Multiple à Répartition dans le Temps).

3. Procédé de sélection de réseau selon la revendication 1, dans lequel ledit code d'identité de réseau comprend une combinaison de code MCC (pour « *Mobile Country Code* » *-* Code de pays pour mobiles) et de code MNC (pour « *Mobile Network Code* » - Code de réseau mobile).

4. Procédé de sélection de réseau selon la revendication 1, la revendication 2 ou la revendication 3, comprenant en outre les étapes consistant à :
déterminer (416) si lesdites procédures de balayage spécifiées pour ladite région géographique extérieure échouent dans l'établissement de la connectivité avec un noeud de réseau (504) fournissant ledit code d'identité de réseau ; et
si tel est le cas, exécuter (408) le balayage des réseaux conformément auxdites procédures de balayage spécifiées pour ladite région géographique de rattachement.

5. Procédé de sélection de réseau selon la revendication 1, dans lequel ladite identité d'abonné comprend un paramètre d'identité internationale d'abonné mobile (IMSI, pour « *International Mobile Subscriber Identity* »).

6. Procédé de sélection de réseau selon la revendication 1, la revendication 2, la revendication 3, la revendication 4 ou la revendication 5, dans lequel la réception dudit code d'identité de réseau comprend l'étape consistant à :
recevoir ledit code d'identité de réseau alors que le dispositif d'équipement d'utilisateur est en mode de sommeil (102).

7. Dispositif d'équipement d'utilisateur (UE) (600) pour réseau sans fil, comprenant:
un sous-système de communication (604) comprenant un module émetteur-récepteur (606), en mesure de recevoir un code d'identité de réseau ;
un module logique (640), en mesure de déterminer si un réseau identifié par ledit code d'identité de réseau est un réseau de rattachement équivalent par rapport à une identité d'abonné associée audit dispositif d'équipement d'utilisateur (600) et, si tel est le cas, ledit module logique (640) déterminant en outre si un code géographique associé audit réseau de rattachement équivalent est associé à la même région géographique que le réseau de rattachement associé à ladite identité d'abonné ;
un moyen utilisable, en réponse à ladite détermination que ledit réseau de rattachement équivalent est associé à la même région géographique que le réseau de rattachement, pour exécuter (408) un balayage des réseaux conformément à des procédures de balayage spécifiées pour une région géographique de rattachement associée à ladite identité d'abonné ; et
un moyen destiné à exécuter (414) le balayage des réseaux conformément à des procédures de balayage spécifiées pour une région géographique extérieure identifiée dans ledit code d'identité de réseau, si ledit code géographique associé audit réseau de rattachement équivalent n'identifie pas la région géographique de rattachement associée à ladite identité d'abonné.

8. Dispositif d'équipement d'utilisateur (UE) (600) selon la revendication 7, dans lequel ledit code d'identité de réseau identifie un réseau qui comprend un réseau RMTP sélectionné dans le groupe composé des réseaux suivants : réseau GPRS, réseau EDGE, réseau 3GPP, réseau IDEN, réseau AMRC, réseau UMTS et réseau AMRT.

9. Dispositif d'équipement d'utilisateur (UE) selon la revendication 7, dans lequel ledit code d'identité de réseau comprend une combinaison de code de pays pour mobiles (MCC) et de code de réseau mobile (MNC).

10. Dispositif d'équipement d'utilisateur (UE) (600) selon la revendication 7, la revendication 8 ou la revendication 9, comprenant en outre :
un moyen destiné à déterminer (416) si lesdites procédures de balayage spécifiées pour ladite région géographique extérieure échouent dans l'établissement de la connectivité avec un noeud de réseau (504) fournissant ledit code d'identité de réseau ; et
un moyen utilisable, en réponse à ladite détermination (416), pour revenir à l'exécution (408) du balayage des réseaux conformément auxdites procédures de balayage spécifiées pour ladite région géographique de rattachement.

11. Dispositif d'équipement d'utilisateur (UE) (600) selon la revendication 7, dans lequel ladite identité d'abonné comprend un paramètre d'identité internationale d'abonné mobile (IMSI).

12. Dispositif d'équipement d'utilisateur (UE) (600) selon la revendication 7, la revendication 8, la revendication 9, la revendication 10 ou la revendication 11, dans lequel ledit module émetteur-récepteur (606) est en mesure de recevoir ledit code d'identité de réseau lorsque le dispositif d'équipement d'utilisateur (600) est en mode de sommeil.

13. Dispositif d'équipement d'utilisateur (UE) (600) selon la revendication 12, dans lequel ledit sous-système de communication (604) comprend en outre un module émetteur-récepteur (608) en mesure de balayer une bande de fréquences conformément à un processus de balayage de réseaux d'accès sans fil, et en outre dans lequel ledit code d'identité de réseau identifie un réseau qui comprend un réseau d'accès sans fil en mesure de fonctionner selon une norme de réseau local sans fil sélectionnée dans le groupe composé des normes suivantes: norme IEEE 802.11b, norme IEEE 802.11a, norme IEEE 802.11g, norme HiperLan, norme Hiperlan II, norme Wi-Max, norme OpenAir et norme Bluetooth.
